# EUROPEAN PATENT APPLICATION

(11) **EP 4 797 422 A1**
(43) Date of publication of application: **26.08.2026**
(21) Application number: 25869647.5
(22) Date of filing: 13.06.2025
(51) Int. Cl.: H01M 50/528, H01M 50/531, H01M 50/538

(54) **ELECTRODE ASSEMBLY, BATTERY AND ELECTRIC DEVICE**

(30) Priority: 06.01.2025 CN 202510020433; 06.01.2025 CN 202520027849 U
(71) Applicant: HUIZHOU EVE POWER CO., LTD, Huizhou, Guangdong 516039 (CN)
(72) Inventor: The designation of the inventor has not yet been filed
(74) Representative: Zhu, Puxing
(86) International application number: PCT/CN2025/100896
(87) International publication number: WO 2026/144001

(57) **Abstract**

An electrode assembly, a battery, and an electric device are provided. The electrode assembly includes a wound body. The wound body includes at least one electrode plate disposed in a wound manner, and the electrode plate includes an electrode plate body, a tab region, and a transition region. The tab region includes a first segment and a second segment, one end of the first segment is connected to one end of the transition region away from the electrode plate body, and the second segment is connected to one end of the first segment away from the transition region. Along the flattening direction from the tab region toward the electrode plate body, the first segment is bent toward a direction away from a winding center, and the second segment is bent toward the winding center.

## Description

This application claims priority to Chinese Patent Application No.202510020433.1 filed on January 06, 2025, and Chinese Patent Application No. 202520027849.1 filed on January 06, 2025, the disclosure of which are incorporated herein by reference in their entireties.

### TECHNICAL FIELD

The invention relates to the field of battery technologies, and in particular, to an electrode assembly, a battery, and an electric device.

### BACKGROUND

The preparation process of the electrode assembly of the full-tab cell generally includes winding of the electrode plate and flattening of the tab. In some related technologies, the flattening of the tabs adopts a mechanical flattening method. Mechanical flattening causes irregular bending of the tabs, resulting in a disorderly arrangement of the tabs. In some other related technologies, after the electrode plate is laminated and wound, mechanical flattening is performed on the tabs, which can improve the distribution regularity of the tabs, but in the flattening process, metal chips are easily generated due to collision and extrusion between the tabs, which may cause a risk of short circuit.

### SUMMARY

It is difficult to balance the reduction of metal chips and the regular arrangement of tabs during the flattening process of the tabs in the electrode assembly.

In order to address the defects in the related art, the main purpose of the invention is to provide an electrode assembly, a battery and an electric device, so as to address the problem that it is difficult to balance the reduction of metal chips and the regular arrangement of tabs during the flattening process of the tabs in the electrode assembly.

To achieve the foregoing objective, in a first aspect, the invention provides an electrode assembly, the electrode assembly includes a wound body, wherein the wound body includes at least one electrode plate disposed in a wound manner, the electrode plate includes an electrode plate body, a tab region, and a transition region, the electrode plate body is coated with an active material, neither the tab region nor the transition region is coated with the active material, the electrode plate body is connected to the tab region through the transition region, and the tab region includes a plurality of tabs arranged along a winding direction; and

wherein the tab region includes a first segment and a second segment, one end of the first segment is connected to one end of the transition region away from the electrode plate body, the second segment is connected to an other end of the first segment away from the transition region, and when the tab region is flattened against the wound body, one of the first segment and the second segment is bent in a direction away from a winding center, and an other one is bent in a direction close to the winding center.

In some embodiments of the invention, a length of the first segment is d1, and a length of the second segment is d2; and
wherein d2> d1.

In some embodiments of the invention, the wound body includes a separator, and the separator is disposed between two adjacent electrode plates with different polarities in a wound manner, in an axial direction of the wound body, the separator includes a first endpoint close to the first segment;
a first bending point is formed at a junction between the first segment and the transition region, a second bending point is formed at a junction between the second segment and the first segment, and along the axial direction of the wound body, a distance between the first bending point and the first endpoint is d3, and a distance between the second bending point and the first endpoint is Y1; and
wherein Y1= d1×X±d3, X is a correction coefficient, and X is greater than 0 and less than 1.

In some embodiments of the invention, in the axial direction of the wound body, when the first bending point is located on a side of the first endpoint close to the electrode plate body, Y1, d1, and d3 satisfy a following formula:
$Y 1 = d 1 \times X - d 3 ;$
in the axial direction of the wound body, when the first bending point is located on a side of the first endpoint away from the electrode plate body, Y1, d1, and d3 satisfy a following formula:
$Y 1 = d 1 \times X + d 3 .$

In some embodiments of the invention, the at least one electrode plate includes a first electrode plate and a second electrode plate, the separator is disposed between the first electrode plate and the second electrode plate, polarities of the first electrode plate and the second electrode plate are opposite, a thickness of the first electrode plate is b1, a thickness of the second electrode plate is b2, a thickness of the separator is b3, and a total thickness of the first electrode plate, the second electrode plate, and two layers of the separator is t=b1+b2+2b3; and
wherein a number of winding turns e1 covered by the first segment in a radial direction of the wound body satisfies:
$e 1 \leq d 1 \div t .$

In some embodiments of the invention, a number of winding turns e2 covered by the second segment in the radial direction of the wound body satisfies:
$e 2 \leq d 2 \div t .$

In some embodiments of the invention, an angle formed between an extending line of the first segment and an extending line of the second segment is greater than 0° and less than 30°.

In some embodiments of the invention, a proportion of an overlapped area between two adjacent ones of the tabs in a same winding turn in a total area of the two adjacent tabs is S1, and a proportion of an overlapped area between two adjacent ones of the tabs in a total area of the two adjacent tabs in the radial direction of the wound body is S2;
wherein the range of S1 is 0< S1< 30%;
wherein S2= (d2+d1-d4-t/cos θ)/(d1+ d2), and a range of S2 is 50% < S2< 95%; and
wherein d4 is a length of a non-overlapped portion between the two adjacent tabs in the radial direction of the wound body, and θ is the angle formed between the extending line of the first segment and the extending line of the second segment.

In some embodiments of the invention, the plurality of tabs of the first electrode plate are bent and stacked to form a first welding surface, and a thickness of the first welding surface available for welding is greater than 0.04 mm and less than 1.2 mm;
wherein the plurality of tabs of the second electrode plate are bent and stacked to form a second welding surface, and a thickness of the second welding surface available for welding is greater than 0.03 mm and less than 0.6 mm.

In some embodiments of the invention, the electrode plate disposed in a wound manner includes an inner non-tab wound segment, a tab wound segment, and an outer non-tab wound segment that are sequentially connected in the winding direction, a maximum radius of the inner non-tab wound segment is r, a radius of a central hole formed by the wound body is r0, and a maximum tab height of a first tab in the tab wound segment along the winding direction is h1<r-r0.

In some embodiments of the invention, a length of the inner non-tab wound segment in the winding direction satisfies: L2≥ L1-L0; and a length of the outer non-tab wound segment in the winding direction satisfies: L5≥ L4-L3;
wherein L0 refers to a virtual arc length wound with the radius of the central hole as a maximum radius and simulating a spiral trajectory of the inner non-tab wound segment; L1 refers to a length of a minimum winding path from a winding radius of 0 to a minimum radius of the inner non-tab wound segment; L2 refers to a length of the inner non-tab wound segment in the winding direction; L3 refers to a total winding length of the wound body from the winding radius of 0 to a radius of a winding initial end of the outer non-tab wound segment; L4 refers to a length of a winding path from the winding radius of 0 to a maximum winding radius; and L5 refers to a length of the outer non-tab wound segment in the winding direction; and
L0, L1, L3, and L4 satisfy a following formula:
   $L = \left(a/2\right) \times \left\{φ⋅√\left(1+φ2\right)+ln\left[φ+√\left(1+φ2\right)\right]\right\} ;$
wherein a is a spiral line parameter, and φ is a rotation angle.

In some embodiments of the invention, a stacked thickness of the first segment corresponding to the plurality of tabs in an axial direction of the wound body satisfies: D1≤ d1÷t × H; and
wherein a stacked thickness of the second segment corresponding to the plurality of tabs in the axial direction of the wound body satisfies: D2≤ d2÷ t × H; and
wherein D1 refers to the stacked thickness of the first segment corresponding to the plurality of tabs in the axial direction of the wound body, D2 refers to the stacked thickness of the second segment corresponding to the plurality of tabs in the axial direction of the wound body, and H refers to a thickness of the transition region.

In some embodiments of the present application, a gap is formed between the first segment and the second segment corresponding to the tabs, and a height of the gap in a stacking direction satisfies: D3= k1× D1+ k2× D2;
a total stacked thickness after the first segment and the second segment after the plurality of tabs are stacked satisfies: D4= D1+ D2+ D3; and
wherein both K1 and K2 are coefficients, K1 satisfies: 0.2< K1< 2, and K2 satisfies: 0.2< K2< 2.

In some embodiments of the invention, in an axial direction of the wound body, a length of the electrode plate body of the first electrode plate is less than a length of the electrode plate body of the second electrode plate, and a shortest distance between the electrode plate body of the second electrode plate and the first segment of the first electrode plate is not greater than 5 mm.

In a second aspect, the invention provides a battery, the battery includes a housing and the electrode assembly according to any one of the first aspect, and the electrode assembly is installed in the housing.

In a third aspect, embodiments of the invention provide an electric device, including the battery according to the second aspect.

### BENEFICIAL EFFECTS

In the embodiments of the invention, the tab region is divided into a first segment and a second segment, and the first segment and the second segment are pre-bent toward different directions, so that in the flattening process of the wound body, the first segment and the second segment can be flattened onto the electrode plate body regularly along the bending direction. In such manner, the flattening process of the tabs does not involve the process of mechanical flattening, which effectively avoids the problem of metal chips generated by flattening. In addition, since the first segment and the second segment are bent toward different directions, the first segment and the second segment can be flattened along the bending directions when the tabs are flattened, thereby improving the distribution pattern of the tabs.

### BRIEF DESCRIPTION OF THE DRAWINGS

FIG. 1 is a schematic diagram of a structure of an electrode assembly according to some embodiments of the invention;
FIG. 2 is a schematic diagram of a structure of adjacent electrode plates in an electrode assembly according to some embodiments of the invention (in a state in which a tab is not bent);
FIG. 3 is a schematic diagram of a structure of adjacent electrode plates in an electrode assembly according to some embodiments of the invention (in a state in which a tab is bent);
FIG. 4 is a schematic diagram of a structure of adjacent electrode plates in an electrode assembly in which a first bending point is located above a first endpoint according to some embodiments of the invention;
FIG. 5 is a schematic diagram of a structure of adjacent electrode plates in an electrode assembly in which a first bending point is located below a first endpoint according to some embodiments of the invention; and
FIG. 6 is a schematic diagram of a structure of an electrode assembly in which a plurality of electrode plates and a separator are disposed adjacently according to some embodiments of the invention.

### Reference numerals:

1-Wound Body; 11-Electrode Plate; 111-Electrode Plate Body; 112-Tab Region; 1121-First Segment; 1122-Second Segment; 113-Transition Region; 114-First Bending Point; 115-Second Bending Point; 116-inner non-tab wound segment; 117-outer non-tab wound segment; 118-Tab Wound Segment; 12-Separator; 121-First endpoint.

### DETAILED DESCRIPTION

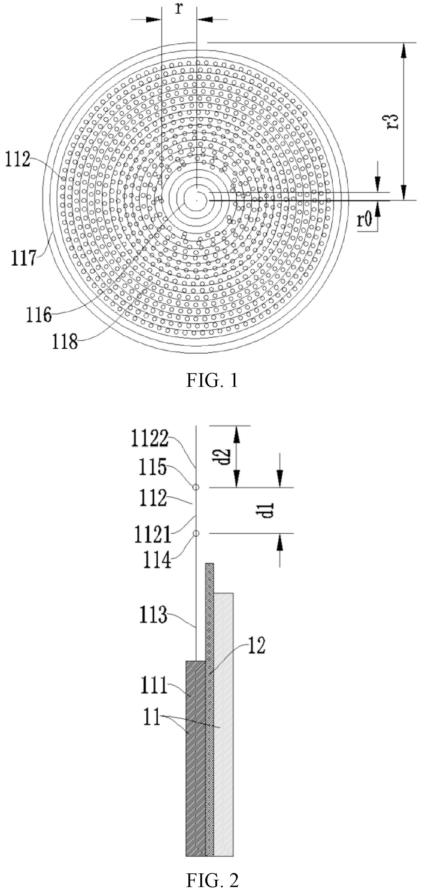

Referring to FIG. 1, FIG. 2, and FIG. 3, embodiments of the invention provide an electrode assembly, including a wound body 1. The wound body 1 includes an electrode plate 11 disposed in a wound manner, and the electrode plate 11 includes an electrode plate body 111, a tab region 112, and a transition region 113. The electrode plate body 111 is coated with an active material, and the electrode plate body 111 is connected to the tab region 112 through the transition region 113. It should be noted that the electrode plate body 111, the transition region 113, and the tab region 112 are essentially a part of the electrode plate 11, respectively, and are integrally formed. The differences among the electrode plate body 111, the transition region 113, and the tab region 112 are that the tab region 112 and the transition region 113 are not coated with the active material, the electrode plate body 111 is coated with the active material. The difference between the tab region 112 and the transition region 113 is mainly that whether it is bent or not, and specifically, the tab region 112 is bent, and the transition region 113 is not bent. In such manner, the electrode plate 11 is divided into three parts. The tab region 112 further includes a plurality of tabs spaced apart along the winding direction.

The tab region 112 includes a first segment 1121 and a second segment 1122, one end of the first segment 1121 is connected to one end of the transition region 113 away from the electrode plate body 111, and the second segment 1122 is connected to one end of the first segment 1121 away from the transition region 113. Along the flattening direction from the tab region 112 toward the electrode plate body 111, the first segment 1121 is bent toward a direction away from the winding center, and the second segment 1122 is bent toward the winding center.

It should be noted that the flattening direction refers to the direction in which the flattening machine flattens the tabs during the flattening process.

In the technical solution provided in the invention, the tab is divided into a first segment 1121 and a second segment 1122, and the first segment 1121 and the second segment 1122 are pre-bent toward different directions, so that in the flattening process of the wound body 1, the first segment 1121 and the second segment 1122 can be flattened onto the electrode plate body 111 regularly along the bending direction. In such manner, the flattening process of the tabs does not involve the process of mechanical flattening, which effectively avoids the problem of metal chips generated by flattening. In addition, since the first segment 1121 and the second segment 1122 are bent toward different directions, the first segment 1121 and the second segment 1122 can be flattened along the bending directions when the tabs are flattened, thereby improving the distribution pattern of the tabs. Specifically, the electrode plate 11 is first coated with the active material, and the electrode plate 11 is divided into an electrode plate body 111 coated with the active material, and a transition region 113 and a tab region 112 that are not coated with the active material. Then the tabs are bent to form a first segment 1121 and a second segment 1122, the first segment 1121 is bent in a direction away from the winding center, and the second segment 1122 is bent in a direction toward the winding center, so that the tabs are provided with the bending directions when subjected to a flattening pressure, and the tabs can be regularly flattened along the bending directions.

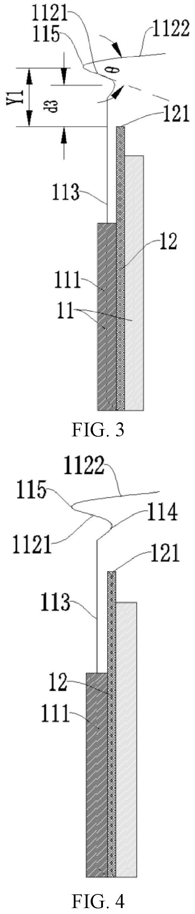

In some embodiments, referring to FIG. 2 and FIG. 3, the first segment 1121 is bent toward the outer side of the wound body, and the second segment 1122 is bent toward the inner side of the wound body, thereby forming a bifold structure from the outside to the inside. This structure can effectively avoid the problems of direction inconsistency and disordered distribution of tabs in the mechanical flattening process. This structure does not need a mechanical flattening method, and the tabs can be regularly distributed by merely being flattened directly. Further, a length of the first segment 1121 is d1, and a length of the second segment 1122 is d2. d2> d1. Specifically, d1 ranges from 0 to 10 mm, and d2 ranges from 0 to 20 mm. Both the first segment 1121 and the second segment 1122 are pre-bent to a certain extent to ensure that the first segment 1121 and the second segment 1122 can be bent in a predetermined direction during the flattening process. The first segment 1121 can play a certain supporting role, and the first segment 1121 and the second segment 1122 are stacked and bent, which can effectively increase the thickness of the tab and facilitate subsequent welding.

Further, the wound body 1 includes a separator 12, the separator 12 is disposed between two adjacent electrode plates 11 in a wound manner, and along the axial direction of the wound body 1, the separator 12 includes a first endpoint 121 close to the first segment 1121. A first bending point 114 is formed at a junction between the first segment 1121 and the transition region, a second bending point 115 is formed at a junction between the second segment 1122 and the first segment 1121. Along the axial direction of the wound body 1, a distance between the first bending point 114 and the first endpoint 121 is d3, and a distance between the second bending point 115 and the first endpoint 121 is Y1.$Y 1 = d 1 \times X \pm d 3 ,$ X is a correction coefficient, and X is greater than 0 and less than 1.

By disposing the separator 12 between adjacent electrode plates 11, the risk of short circuit between adjacent electrode plates 11 can be effectively avoided, and the bending portion of the tabs can also be supported and protected. By defining the distance Y1 between the second bending point 115 and the first endpoint 121 and the distance between the first bending point 114 and the first endpoint 121 along the axial direction of the wound body 1, it can be ensured that the distribution of the tabs after being bent will not interfere with the separator 12.

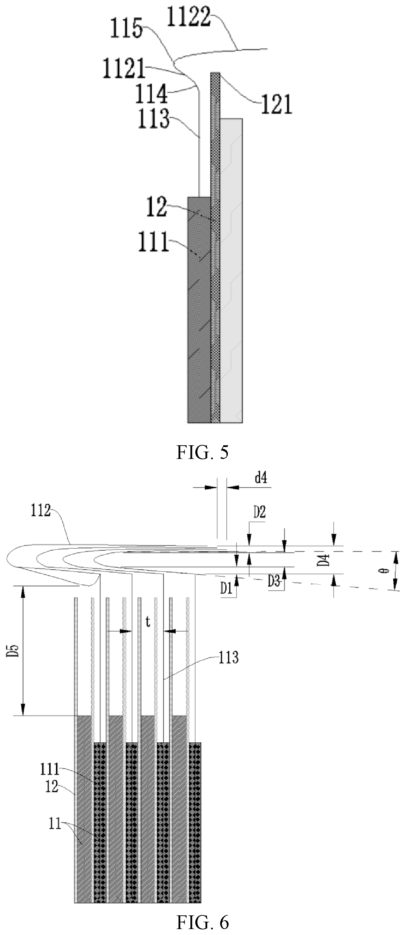

Further, referring to FIG. 4 and FIG. 5, along the axial direction of the wound body 1, when the first bending point 114 is located below the first endpoint 121, Y1, d1, and d3 satisfy the following formula:
$Y 1 = d 1 \times X - d 3 .$

Along the axial direction of the wound body 1, when the first bending point 114 is located above the first endpoint 121, Y1, d1, and d3 satisfy the following formula:
$Y 1 = d 1 \times X + d 3 .$

The distance between the first endpoint 121 of the separator 12 and the second bending point 115 is reasonably calculated based on the position of the first bending point 114 in the axial direction, so as to effectively avoid the influence of bending of the tabs on the separator 12.

In some embodiments, the electrode plate 11 includes a first electrode plate and a second electrode plate. The separator 12 is disposed between the first electrode plate and the second electrode plate, and polarities of the first electrode plate and the second electrode plate are opposite. A thickness of the first electrode plate is b1, a thickness of the second electrode plate is b2, a thickness of the separator 12 is b3, and a total thickness of the adjacent first electrode plate, second electrode plate, and two separators 12 is t=b1+b2+2b3. The number of winding turns covered by the second segment 1122 in the radial direction of the wound body 1 satisfies: e2≤d2÷t.

Specifically, the first electrode plate and the second electrode plate are respectively coated with an active material for electrochemical reactions of the positive electrode and the negative electrode. One layer of the separator 12 in one winding turn is located between the first electrode plate and the second electrode plate, another layer of the separator 12 in another winding turn is located on a side of the first electrode plate away from the second electrode plate or on a side of the second electrode plate away from the first electrode plate. The first electrode plate, the second electrode plate, and the two layers of the separator 12 together form a jelly roll basic unit, and the wound body 1 is formed by a plurality of jelly roll basic units sequentially wound along a winding direction. The separator 12 is generally made of a porous polypropylene (PP) or polyethylene (PE) material. The number of winding turns is controlled by the ratio of the length of the second segment 1122 of the tab to the total thickness, the distribution of the tabs in the radial direction is more uniform, and the welding area is fully covered, thereby avoiding the problem of local overheating or stress concentration during the welding process. With unchanged radius of the electrode assembly, if the total thickness t is too large, it will reduce the stacking density of tabs in the radial direction, which may affect the welding strength and may further cause burns to the separator 12. If the total thickness t is too small, it causes difficulty in the manufacturing process. By controlling the reasonable value of the total thickness t, the welding strength and the overall performance of the battery are balanced.

In some embodiments, referring to FIG. 6, the number of winding turns covered by the first segment 1121 in the radial direction of the wound body 1 satisfies: e1≤d1÷t, which is beneficial to improving the regularity of the first segment 1121 of the plurality of tabs after being bent and flattened.

In some embodiments, an angle is formed between an extending line of the first segment 1121 and an extending line of the second segment 1122, and the angle is greater than 0° and less than 30°. When the angle between the extending line of the first segment 1121 and the extending line of the second segment 1122 is greater than 0° and less than 30 °, it is beneficial to satisfy the distribution regularity of the tabs during the winding process, and can also provide reasonable stacking support and stability during welding. Specifically, when the angle is close to 0°, the first segment 1121 and the second segment 1122 tend to be parallel, resulting in the tabs stacked too densely and increasing local stress. When the angle is close to 30°, the first segment 1121 and the second segment 1122 represent an obvious separation trend, forming a large distribution range, which is conducive to the stacking uniformity. However, if the distribution range is too large, the gap between the stacking areas will increase, which affects the welding strength.

Further, the proportion of the overlapping area between adjacent two tabs in the same winding turn to the total area of the two tabs is S1, and the proportion of the overlapping area between adjacent two tabs in the radial direction of wound body 1 to the total area of the two tabs is S2.

The range of S1 is 0< S1< 30%; S2= (d2+ d1-d4- t/cos θ)/(d1+ d2), and the range of S2 is 50% < S2< 95%. d4 is a length of a non overlapped portion between two adjacent tabs along the radial direction of the wound body 1.

Two adjacent tabs in the same winding turn will be overlapped with each other, and the area proportion of the overlapped portion is S1, and 0< S1< 30%. Two adjacent tabs in different winding turns will also be overlapped with each other, and an area proportion of the overlapped portion is S2, and 50% < S2< 95%. The specific calculation formula of S2 is as follows:
$S 2 = \left(d2+d1-d4-t/cosθ\right) / \left(d1+d2\right) .$

Specifically, d1 and d2 are respectively the lengths of the first segment 1121 and the second segment 1122; d4 is the length of the non-overlapped portion between two adjacent tabs along the radial direction of the wound body; t is the thickness of the jelly roll basic unit; θ is the angle formed between the extending line of the first segment 1121 and the extending line of the second segment 1122. In the same winding turn, adjacent tabs are distributed closely, causing the tabs to be partially overlapped with each other. By controlling the overlapped area between 0% and 30%, it can avoid the problem of excessive stacking thickness caused by excessive overlap of multipole tabs, while ensuring the compactness of the structure. The tabs of adjacent winding turns are overlapped in the radial direction, and the proportion of the overlapped area ranges from 50% to 95%. The design of the proportion aims to improve the welding strength of the stacked structure, and avoid excessive gaps between adjacent tabs, thereby ensuring the uniformity and support of the overall stacked structure.

By limiting the range of S1 and S2, it is ensured that the tabs are stacked densely, and it also avoids the problem of excessive local pressure caused by being stacked too densely or unstable welding due to being stacked too sparsely. The overlapped ratio of the tabs in the same winding turn is controlled by the value of S1, and if the value is too large (for example, S1>30%), the thickness of the stacked region is significantly increased, which affects the stacking uniformity, and there is a risk of uncontrollable process due to the occurrence of poor end face and tab folding. The overlapped ratio of the tabs between adjacent winding turns is controlled by the value of S2, if the value is too small (for example, S2<50%), the welding strength of the stacked region is insufficient and the internal resistance is increased, and if the value is too large (for example, S2>95%), the difficulty of the process is increased, and the electrode performance is affected. The calculation formula of S2 clarifies the overlapped relationship between adjacent tabs, so that the thickness and distribution of the welding region are more uniform, and the risk of failure caused by thermal stress in the welding process is reduced.

In some embodiments, referring to FIG. 1, the wound electrode plate 11 includes an inner non-tab wound segment 116, a tab wound segment 118, and an outer non-tab wound segment 117 that are sequentially connected in the winding direction, a maximum radius of the inner non-tab wound segment 116 is r, a radius of a central hole formed by the wound body 1 is r0, and a maximum tab height of a first tab in the tab wound segment 118 along the winding direction is h1<r-r0.

Further, the length of the tab in the axial direction ranges from 1 mm to 6 mm. In addition, lengths of the plurality of tabs in the axial direction may be the same, or may be gradually increased along the winding direction. If the lengths are gradually increased, along the winding direction, the difference between lengths of adjacent tabs in the axial direction ranges from 0.2 to 2 mm. The shape of the tab may be rectangular, trapezoidal or other irregular shapes, which is not limited herein. In addition, after the wound body 1 is formed, the tabs are also wound with the winding of the electrode plate body 111, curvatures of the wound tabs are less than 30°, and a curvature difference between two adjacent turns of tabs is less than 3°.

It should be noted that the inner non-tab wound segment 116 refers to a portion of the wound body 1 close to the winding center in the winding direction and without tabs, the outer non-tab wound segment 117 refers to a portion of the wound body 1 close to the winding edge in the winding direction and without tabs, and the tab wound segment 118 refers to a portion of the winding body located between the inner non-tab wound segment 116 and the outer non-tab wound segment 117 in the winding direction.

By providing the inner non-tab wound segment 116, it is beneficial to optimize the stability of the core of the electrode assembly. By providing the outer non-tab wound segment 117, it is beneficial to protect the outer turn of the electrode assembly and reduce stress concentration. After the flattening process is performed, the second segment 1122 is flattened, the minimum radius of the inner non-tab wound segment 116 can be determined according to the formula h1<r-r0, and after the minimum radius is determined, the lower limit value of the length of the inner non-tab wound segment 116 in the winding direction can be calculated according to the related calculation formula of the spiral line. The specific calculation method is as follows:

According to the calculation formula of the spiral line parameter: a = t ÷ 2π, and t is the thickness of the jelly roll basic unit. For the electrode assembly, t is equivalent to the sum of the thicknesses of the first electrode plate, the second electrode plate (generally, the thickness of the first electrode plate is 50-200 um; the thickness of the second electrode plate is 50-250 um), and two layers of separators 12. A relationship between the radius r of the jelly roll and the rotation angle ϕ of the jelly roll corresponding to the radius satisfies: r=r0+ a·ϕ. r0 is the radius of the center hole. According to the Archimedes spiral theory, the following parameters can be calculated according to the formula below: a virtual arc length wound with the radius of the central hole as the maximum radius and simulated the spiral trajectory of the inner non-tab wound segment 116; a minimum arc length of the inner non-tab wound segment 116; a winding length of the wound body 1 in the winding direction; and a total winding length of the wound body 1 from the winding radius of 0 to the radius of the initial end of the outer non-tab wound segment 117. The specific formula is as follows:
$L = \left(a/2\right) \times \left\{φ⋅√\left(1+φ2\right)+ln\left[φ+√\left(1+φ2\right)\right]\right\} .$

Further, the length of the inner non-tab wound segment 116 in the winding direction satisfies: L2≥ L1-L0. The length of the outer non-tab wound segment 117 in the winding direction satisfies: L5≥ L4-L3.

L0 refers to the virtual arc length wound with the radius of the central hole as the maximum radius and simulated the spiral trajectory of the inner non-tab wound segment 116; L1 refers to the length of the minimum winding path from the winding radius of 0 to the minimum radius of the inner non-tab wound segment 116; L2 refers to the length of the inner non-tab wound segment 116 in the winding direction; L3 refers to the total winding length of the wound body 1 from the winding radius of 0 to the radius of the winding initial end of the outer non-tab wound segment 117; L4 refers to the length of the winding path from a winding radius of 0 to a maximum winding radius; and L5 refers to the length of the outer non-tab wound segment 117 in the winding direction.

According to the content in the embodiments described above, it can be concluded that L0, L1, L3, and L4 all satisfy the following formula:
$L = \left(a/2\right) \times \left\{φ⋅√\left(1+φ2\right)+ln\left[φ+√\left(1+φ2\right)\right]\right\} ,$ a is the spiral line parameter, and φ refers to the rotation angle.

It should be noted that L4 and L3 need to be calculated before L4-L3 is used to calculate the length of the outer non-tab wound segment 117 in the winding direction. The calculation of L4 and L3 is different from the calculation of L0 and L1. Specifically, the maximum radius of the wound body 1 is r3, and it can be seen from the polar coordinate formula that the total rotation angle φ1 of the wound body 1 satisfies: φ1= r3/a, and the total rotation angle includes the winding angle of the central virtual portion of the wound body 1. The number of die-cutting turns of the periphery of the wound body 1 is e3, and the total rotation angle of the wound body 1 from the winding radius of 0 to the radius of the winding initial end of the outer non-tab wound segment 117 is φ2= r3/a-2π·e3. On the basis of obtaining the rotation angle and the spiral line parameter, the rotation angle and the spiral line parameter are respectively substituted into the two formulas L = (a/2) × {φ · √ (1+ φ2)+ln [φ+√ (1+ φ2)]} and L5≥ L4-L3, so that the length of the outer non-tab wound segment 117 in the winding direction can be obtained.

In some embodiments, referring to FIG. 6, a stacked thickness of the first segment 1121 of the plurality of tabs in the axial direction of the wound body 1 satisfies: D1≤ d1÷ t × H.

A stacked thickness of the second segment 1122 of the plurality of tabs in the axial direction of the wound body 1 satisfies: D2≤ d2÷ t × H.

D1 refers to the stacked thickness of the first segment 1121 of the plurality of tabs in the axial direction of the wound body 1, D2 refers to the stacked thickness of the second segment 1122 of the plurality of tabs in the axial direction of the wound body 1, and H refers to a thickness of the transition region 113.

By defining the stacked thickness of the first segment 1121 in the axial direction of the wound body 1 and the stacked thickness of the second segment 1122 in the axial direction of the wound body 1, the stacked uniformity of the tabs in the axial direction is ensured, and the problem of mechanical instability due to the stacked thickness being too large or too small is reduced.

Further, a gap is formed between the stacking of the first segment 1121 and the stacking of the second segment 1122 of the tabs, and a height of the gap in the stacked direction satisfies: D3= k1× D1+ k2× D2. A total stacked thickness after the first segment 1121 and the second segment 1122 of the plurality of tabs are stacked satisfies: D4= D1+ D2+ D3. Both K1 and K2 are coefficients, K1 satisfies: 0.2< K1< 2, and K2 satisfies: 0.2< K2< 2. In the embodiments, not only the stacked thicknesses of the first segment 1121 and the second segment 1122, but also the stacked gap formed between the stacked first segment 1121 and the stacked second segment 1122 due to structural reasons and the like are considered, so that the calculation of the total stacked thickness is more accurate, which is beneficial to the subsequent control of the welding area and thickness by welding.

In some embodiments, the plurality of tabs of the first electrode plate are bent and stacked to form a first welding surface, and a thickness range of the first welding surface that can be welded is greater than 0.04 mm and less than 1.2 mm. The plurality of tabs of the second electrode plate are bent and stacked to form a second welding surface, and a thickness range of the second welding surface that can be welded is greater than 0.03 mm and less than 0.6 mm.

In some embodiments, along the axial direction of the wound body 1, the length of the electrode plate body 111 of the first electrode plate is less than the length of the electrode plate body 111 of the second electrode plate, and the distance between the electrode plate body 111 of the second electrode plate and the first segment 1121 of the first electrode plate is D5, D5≤5mm. By limiting the distance between the electrode plate body 111 of the second electrode plate and the first segment 1121 of the first electrode plate to be not greater than 5 mm, it is beneficial to improve the safety boundary of the battery, so as to cope with the occurrence of abnormal layout situation, for example, the abnormal folding and collapse of the tabs may occur between the upper tab and the lower tab in this region, which can also cope with the expansion of the electrode assembly, leaving a margin for the expansion of the electrode assembly in the axial direction.

Embodiments of the invention further provide a battery, and the battery may be a cylindrical battery. The battery includes a housing and the electrode assembly according to any one of the embodiments described above, and the electrode assembly is installed in the housing. The battery has the structure and corresponding beneficial effects of the electrode assembly in the embodiments described above, which are not described herein again.

Embodiments of the invention further provide an electric device, and the electric device includes the battery in the embodiments described above. The electric device has the structure and corresponding beneficial effects of the battery in the embodiments described above, which are not described herein again.

## Claims

1. An electrode assembly comprising a wound body, wherein the wound body comprises at least one electrode plate disposed in a wound manner, the electrode plate comprises an electrode plate body, a tab region, and a transition region, the electrode plate body is coated with an active material, neither the tab region nor the transition region is coated with the active material, the electrode plate body is connected to the tab region through the transition region, and the tab region comprises a plurality of tabs arranged along a winding direction; and
wherein the tab region comprises a first segment and a second segment, one end of the first segment is connected to one end of the transition region away from the electrode plate body, the second segment is connected to an other end of the first segment away from the transition region, and when the tab region is flattened against the wound body, one of the first segment and the second segment is bent in a direction away from a winding center, and an other one is bent in a direction close to the winding center.

2. The electrode assembly according to claim 1, wherein a length of the first segment is d1, and a length of the second segment is d2; and
wherein d2>d1.

3. The electrode assembly according to claim 2, wherein the wound body comprises a separator, and the separator is disposed between two adjacent electrode plates with different polarities in a wound manner.

4. The electrode assembly according to claim 3, wherein in an axial direction of the wound body, the separator comprises a first endpoint close to the first segment;
a first bending point is formed at a junction between the first segment and the transition region, a second bending point is formed at a junction between the second segment and the first segment, and along the axial direction of the wound body, a distance between the first bending point and the first endpoint is d3, and a distance between the second bending point and the first endpoint is Y1; and
wherein Y1= d1×X±d3, X is a correction coefficient, and X is greater than 0 and less than 1.

5. The electrode assembly according to claim 4, wherein in the axial direction of the wound body, when the first bending point is located on a side of the first endpoint close to the electrode plate body, Y1, d1, and d3 satisfy a following formula:Y1=d1×X-d3.

6. The electrode assembly according to claim 4, wherein in the axial direction of the wound body, when the first bending point is located on a side of the first endpoint away from the electrode plate body, Y1, d1, and d3 satisfy a following formula: Y1=d1×X+d3.

7. The electrode assembly according to any one of claims 2 to 6, wherein the at least one electrode plate comprises a first electrode plate and a second electrode plate, the separator is disposed between the first electrode plate and the second electrode plate, polarity of the first electrode plate and polarity of the second electrode plate are opposite, a thickness of the first electrode plate is b1, a thickness of the second electrode plate is b2, a thickness of the separator is b3, and a total thickness of the first electrode plate, the second electrode plate, and two layers of the separator is t=b1+b2+2b3; and
wherein a number of winding turns e1 covered by the first segment in a radial direction of the wound body satisfies: e1≤d1÷t.

8. The electrode assembly according to claim 7, wherein a number of winding turns e2 covered by the second segment in the radial direction of the wound body satisfies: e2≤d2÷t.

9. The electrode assembly according to claim 7, wherein an angle formed between an extending line of the first segment and an extending line of the second segment is greater than 0° and less than 30°.

10. The electrode assembly according to claim 9, wherein a proportion of an overlapped area between two adjacent ones of the tabs in a same winding turn in a total area of the two adjacent tabs is S1, and a proportion of an overlapped area between two adjacent ones of the tabs in a total area of the two adjacent tabs in the radial direction of the wound body is S2;
wherein a range of S1 is 0< S1< 30%;
wherein S2= (d2+d1-d4-t/cos θ)/(d1+d2), and a range of S2 is 50% < S2< 95%; and
wherein d4 is a length of a non-overlapped portion between the two adjacent tabs in the radial direction of the wound body, and θ is the angle formed between the extending line of the first segment and the extending line of the second segment.

11. The electrode assembly according to claim 7, wherein the plurality of tabs of the first electrode plate are bent and stacked to form a first welding surface, and a thickness of the first welding surface available for welding is greater than 0.04 mm and less than 1.2 mm./

12. The electrode assembly according to claim 7, wherein the plurality of tabs of the second electrode plate are bent and stacked to form a second welding surface, and a thickness of the second welding surface available for welding is greater than 0.03 mm and less than 0.6 mm.

13. The electrode assembly according to any one of claims 1 to 12, wherein the electrode plate disposed in a wound manner comprises an inner non-tab wound segment, a tab wound segment, and an outer non-tab wound segment that are sequentially connected in the winding direction, a maximum radius of the inner non-tab wound segment is r, a radius of a central hole formed by the wound body is r0, and a maximum tab height of a first tab in the tab wound segment along the winding direction is h1<r-r0.

14. The electrode assembly according to claim 13, wherein a length of the inner non-tab wound segment in the winding direction satisfies: L2≥ L1-L0; and a length of the outer non-tab wound segment in the winding direction satisfies: L5≥ L4-L3;
wherein L0 refers to a virtual arc length wound with the radius of the central hole as a maximum radius and simulating a spiral trajectory of the inner non-tab wound segment; L1 refers to a length of a minimum winding path from a winding radius of 0 to a minimum radius of the inner non-tab wound segment; L2 refers to a length of the inner non-tab wound segment in the winding direction; L3 refers to a total winding length of the wound body from the winding radius of 0 to a radius of a winding initial end of the outer non-tab wound segment; L4 refers to a length of a winding path from the winding radius of 0 to a maximum winding radius; and L5 refers to a length of the outer non-tab wound segment in the winding direction; and
L0, L1, L3, and L4 satisfy a following formula: $L = \left(a/2\right) \times \left\{φ⋅√\left(1+φ2\right)+ln\left[φ+√\left(1+φ2\right)\right]\right\} ;$
wherein a is a spiral line parameter, and φ is a rotation angle.

15. The electrode assembly according to claim 7, wherein a stacked thickness of the first segment corresponding to the plurality of tabs in an axial direction of the wound body satisfies: D1≤ d1÷ t × H; and
wherein D1 refers to the stacked thickness of the first segment corresponding to the plurality of tabs in the axial direction of the wound body, and H refers to a thickness of the transition region.

16. The electrode assembly according to claim 15, wherein a stacked thickness of the second segment corresponding to the plurality of tabs in the axial direction of the wound body satisfies: D2≤ d2÷ t × H; and
wherein D2 refers to the stacked thickness of the second segment corresponding to the plurality of tabs in the axial direction of the wound body, and H refers to the thickness of the transition region.

17. The electrode assembly according to claim 16, wherein a gap is formed between a stacking of the first segment and a stacking of the second segment corresponding to the tabs, and a height of the gap in a stacked direction satisfies: D3= k1×D1+ k2×D2;
a total stacked thickness after the first segment and the second segment after the plurality of tabs are stacked satisfies: D4= D1+ D2+ D3; and
wherein both K1 and K2 are coefficients, K1 satisfies: 0.2< K1< 2, and K2 satisfies: 0.2< K2< 2.

18. The electrode assembly according to claim 7, wherein in an axial direction of the wound body, a length of the electrode plate body of the first electrode plate is less than a length of the electrode plate body of the second electrode plate, and a shortest distance between the electrode plate body of the second electrode plate and the first segment of the first electrode plate is not greater than 5 mm.

19. A battery, comprising a housing and the electrode assembly according to any one of claims 1 to 18, wherein the electrode assembly is installed in the housing.

20. An electric device comprising the battery according to claim 19.
